(19)

Europäisches
Patentamt

European
Patent Office

Office européen
des brevets

(11) **EP 4 317 236 A1**

(12) **EUROPEAN PATENT APPLICATION**
published in accordance with Art. 153(4) EPC

(43) Date of publication:
**07.02.2024 Bulletin 2024/06**

(21) Application number: **22774692.2**

(22) Date of filing: **03.02.2022**

(51) International Patent Classification (IPC):
*C08G 59/20* (2006.01)        *C08G 59/50* (2006.01)
*C08K 5/521* (2006.01)        *C08L 63/00* (2006.01)
*C08J 5/24* (2006.01)

(52) Cooperative Patent Classification (CPC):
**C08G 59/20; C08G 59/50; C08J 5/24; C08K 5/521;
C08L 63/00;** Y02T 50/40

(86) International application number:
**PCT/JP2022/004172**

(87) International publication number:
**WO 2022/201890 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2021 JP 2021046843
28.04.2021 JP 2021075667**

(71) Applicant: **Toray Industries, Inc.
Tokyo 103-8666 (JP)**

(72) Inventors:
• **FURUKAWA, Koji
Iyo-gun, Ehime 791-3193 (JP)**
• **SANO, Kentaro
Iyo-gun, Ehime 791-3193 (JP)**
• **KAWASAKI, Junko
Iyo-gun, Ehime 791-3193 (JP)**

(74) Representative: **Kador & Partner Part mbB
Corneliusstraße 15
80469 München (DE)**

(54) **EPOXY RESIN COMPOSITION, PREPREG, AND FIBER-REINFORCED COMPOSITE MATERIAL**

(57)    An object of the present invention is to provide an epoxy resin composition which can be suitably used in prepreg and fiber-reinforced composite material applications, and which has an excellent strength, elastic modulus, elastic modulus under hot wet conditions and heat resistance after moisture absorption. The gist of the present invention is an epoxy resin composition including the following components [A], [B] and [C]:
[A]: an epoxy resin,
[B]: an amine curing agent, and

[C]: a phosphate ester compound having a molecular weight of 250 or less;
wherein the epoxy resin composition satisfies the following requirements (1) and (2):
(1): the epoxy resin composition includes 1 part by mass or more and 15 parts by mass or less of the component [C] with respect to 100 parts by mass of the component [A]; and
(2): the component [A] has an average epoxy equivalent of 160 g/eq or less.

EP 4 317 236 A1

**Description**

Technical Field

The present invention relates to an epoxy resin composition which can be suitably used in a fiber-reinforced composite material for use in an aerospace application, a general industrial application, a sports application or the like, as well as a prepreg and a fiber-reinforced composite material using the epoxy resin composition.

Background Art

Fiber-reinforced composite materials produced using carbon fibers, aramid fibers etc., as reinforcing fibers are widely used as structural materials for aircrafts, automobiles and the like, as well as sports and general industrial applications, such as tennis rackets, golf club shafts, fishing rods, bicycles and casings, utilizing their high specific strength and specific modulus. Thermosetting resins are mainly used as the resin compositions to be used in such fiber-reinforced composite materials, from the viewpoints of heat resistance and productivity. In particular, epoxy resins are preferably used from the viewpoint of mechanical properties, such as adhesion to the reinforcing fibers.
In recent years, improvements in various physical properties are needed in order to use fiber-reinforced composite materials in applications for which a further reduction in weight is required, and improvements in the strength, elastic modulus and heat resistance of the epoxy resins to be used as matrix resins are required. Further, in the case of using fiber-reinforced composite materials as structural materials for aerospace applications, vehicles and the like, the composite materials are required to sufficiently maintain physical properties under high temperature and/or high humidity conditions. Therefore, it has been a technical problem to be solved, to simultaneously improve the elastic modulus under hot wet conditions (namely, the hot wet elastic modulus) and the heat resistance after moisture absorption (namely, maintaining a sufficient glass transition temperature even after absorbing moisture), in addition to improving the strength and elastic modulus, of the matrix resins.
Various studies have been done in order to solve such a problem to achieve improvements. For example, a technique to combine an epoxy resin and a phosphite ester or phosphate ester compound to improve the strength of the resulting resin cured product has been examined (Patent Literature 1).

Citation List

Patent Literature

Patent Literature 1: JP 2019-199552 A

Summary of Invention

Technical Problem

While the use of the technique disclosed in Patent Literature 1 improves the strength of the resulting fiber-reinforced composite material, mechanical properties under high temperature and/or high humidity conditions are not considered therein. That is, since the technique disclosed n Patent Literature 1 is intended to "improve he flexural elastic modulus or flexural strength of the resulting cured product, by the action of a phosphate ester or a phosphite ester to improve the adhesion between carbon fibers and a matrix resin", as described in the specification of Patent Literature 1, and does not focus on the interaction between a cross-linked structure formed by curing the epoxy resin in the fiber-reinforced composite material with the above-described phosphate ester-based compound; therefore, the above-described properties were not sufficient.
Accordingly, an object of the present invention is to provide an epoxy resin composition which can be suitably used in prepreg and fiber-reinforced composite material applications, and which has an excellent balance between the strength, the elastic modulus, the elastic modulus under hot wet conditions and the heat resistance after moisture absorption.

Solution to Problem

The present invention employs the following constitution in order to achieve the above-mentioned object. Specifically, the present invention provides an epoxy resin composition including the following components [A], [B] and [C]:

    [A]: an epoxy resin,

[B]: an amine curing agent, and

[C]: a phosphate ester compound having a molecular weight of 250 or less; wherein the epoxy resin composition satisfies the following requirements (1) and (2):

(1): the epoxy resin composition includes 1 part by mass or more and 15 parts by mass or less of the component [C] with respect to 100 parts by mass of the component [A]; and

(2): the component [A] has an average epoxy equivalent of 160 g/eq or less.

Further, the present invention provides a prepreg composed of the epoxy resin composition according to the present invention and reinforcing fibers, and a fiber-reinforced composite material composed of a cured product of the epoxy resin composition according to the present invention and reinforcing fibers. Advantageous Effects of Invention

The present invention enables to obtain an epoxy resin composition which can be suitably used in prepreg and fiber-reinforced composite material applications, and which has an excellent balance between the strength, the elastic modulus, the elastic modulus under hot wet conditions and the heat resistance after moisture absorption.

Description of Embodiments

The present invention will be described below in detail. In the present invention, the expression "or more" means being equal to or higher than the numerical value indicated before the expression. The expression "or less" means being equal to or lower than the numerical value indicated before the expression.

The resin composition according to the present invention contains a component [A], a component [B], and a component [C] as essential components. In the present invention, the "component" refers to an individual component contained in the resin composition.

The component [A] in the present invention is an epoxy resin. The epoxy resin as the component [A] is preferably an epoxy resin containing two or more epoxy groups within one molecule, because such a resin enables to increase the glass transition temperature of a cured product obtained by heat curing the resin composition, and to improve the heat resistance thereof. Further, the epoxy resin composition may contain an epoxy resin containing one epoxy group within one molecule as the component [A]. Such epoxy resins may be used singly, or a plurality of kinds thereof may be used.

Examples of the epoxy resin as the component [A] include: glycidyl amine type epoxy resins such as diaminodiphenylmethane type epoxy resins, diaminodiphenyl sulfone type epoxy resins, aminophenol type epoxy resins, m-xylenediamine type epoxy resins and 1,3-bisaminomethylcyclohexane type epoxy resins; glycidyl ether type epoxy resins such as bisphenol type epoxy resins, phenol novolac type epoxy resins, orthocresol novolac type epoxy resins, trishydroxyphenylmethane type epoxy resins and tetraphenylolethane type epoxy resins; isocyanurate type epoxy resins; and hydantoin type epoxy resins. Of these, glycidyl amine type epoxy resins and glycidyl ether type epoxy resins are preferably used, because these resins have a good balance between physical properties. In particular, diaminodiphenylmethane type epoxy resins, aminophenol type epoxy resins and bisphenol type epoxy resins are particularly preferably used.

The epoxy resin composition preferably contains from 20 to 80 parts by mass, more preferably from 20 to 60 parts by mass of a glycidyl ether type epoxy resin in 100 parts by mass of the component [A], from the viewpoints of the mechanical properties under hot wet conditions and the heat resistance after moisture absorption. When the epoxy resin composition contains from 20 to 80 parts by mass of a glycidyl ether type epoxy resin in 100 parts by mass of the component [A], it is possible to obtain a cured product in which a decrease in the resin elongation under hot wet conditions is small, and which has a sufficient glass transition temperature even after moisture absorption.

Examples of commercially available products of the diaminodiphenylmethane type epoxy resin include: "SUMI-EPOXY (registered trademark)" ELM 434 (manufactured by Sumitomo Chemical Co., Ltd.); "ARALDITE (registered trademark)" MY 720 (manufactured by Huntsman Advanced Materials, Inc.), "ARALDITE (registered trademark)" MY 721 (manufactured by Huntsman Advanced Materials, Inc.), "ARALDITE (registered trademark)" MY 9512 (manufactured by Huntsman Advanced Materials, Inc.) and "ARALDITE (registered trademark)" MY 9663 (manufactured by Huntsman Advanced Materials, Inc.);"EPOTOTE (registered trademark)" YH-434 (manufactured by NIPPON STEEL Chemical & Material Co., Ltd.); and "jER (registered trademark)" 630 (manufactured by Mitsubishi Chemical Corporation).

Examples of commercially available products of the diaminodiphenyl sulfone type epoxy resin include TG3DAS (manufactured by Mitsui Fine Chemicals, Inc.).

Examples of commercially available products of the aminophenol type epoxy resin include: ELM 120 (manufactured by Sumitomo Chemical Co., Ltd.) and ELM 100 (manufactured by Sumitomo Chemical Co., Ltd.); "jER (registered trademark)" 630 (manufactured by Mitsubishi Chemical Corporation); and "ARALDITE (registered trademark)" MY 0500 (manufactured by Huntsman Advanced Materials, Inc.), "ARALDITE (registered trademark)" MY 0510 (manufactured by Huntsman Advanced Materials, Inc.), "ARALDITE (registered trademark)" MY 0600 (manufactured by Huntsman Advanced Materials, Inc.) and "ARALDITE (registered trademark)" MY 0610 (manufactured by Huntsman Advanced Materials, Inc.).

Examples of commercially available products of a bisphenol A type epoxy resin include "EPON (registered trademark)" 825 (manufactured by Mitsubishi Chemical Corporation), "EPICLON (registered trademark)" 850 (manufactured by DIC Corporation), "EPOTOTE (registered trademark)" YD-128 (manufactured by NIPPON STEEL Chemical & Material Co., Ltd.), and DER-331 and DER-332 (both manufactured by Dow Chemical Company).

Examples of commercially available products of a bisphenol F type epoxy resin include: "ARALDITE (registered trademark)" GY282 (manufactured by Huntsman Advanced Materials, Inc.); "jER (registered trademark)" 806, "jER (registered trademark)" 807 and "jER (registered trademark)" 1750 (all of the above manufactured by Mitsubishi Chemical Corporation); "EPICLON (registered trademark)" 830 (manufactured by DIC Corporation); and "EPOTOTE (registered trademark)" YD-170 (manufactured by NIPPON STEEL Chemical & Material Co., Ltd.).

Examples of commercially available products of the isocyanurate type epoxy resin include "TEPIC (registered trademark)" S (manufactured by Nissan Chemical Industries, Ltd.), "TEPIC (registered trademark)"-G (manufactured by Nissan Chemical Industries, Ltd.) and "TEPIC (registered trademark)"-L (manufactured by Nissan Chemical Industries, Ltd.).

The epoxy resin which can be used in the epoxy resin composition according to the present invention is not limited to the epoxy resins described above, and epoxy resins other than those mentioned above can of course be used.

The component [A] has an average epoxy equivalent of 160 g/eq or less, the reason for which will be described later, and the epoxy resin composition preferably contains 40% by mass or more of an epoxy resin having an epoxy equivalent of 130 g/eq or less in 100% by mass of the component [A]. When the epoxy resin composition contains 40% by mass or more, more preferably 50% by mass or more, and still more preferably 60% by mass or more of an epoxy resin having an epoxy equivalent of 130 g/eq or less, it is possible to obtain an excellent cured product having a sufficient glass transition temperature even after moisture absorption.

In the present invention, the "epoxy equivalent" is understood as the mass ((g/eq) is used as the unit) of an epoxy resin containing 1 mole of epoxy groups.

Examples of commercially available products of the epoxy resin having an epoxy equivalent of 130 g/eq or less include "SUMI-EPOXY (registered trademark)" ELM 434 (epoxy equivalent: 119 g/eq), "ARALDITE (registered trademark)" MY 720 (epoxy equivalent: 119 g/eq), "ARALDITE (registered trademark)" MY 721 (epoxy equivalent: 114 g/eq), "ARALDITE (registered trademark)" MY 9512 (epoxy equivalent: 126 g/eq), "ARALDITE (registered trademark)" MY 9663 (epoxy equivalent: 126 g/eq), "EPOTOTE (registered trademark)" YH-434 (epoxy equivalent: 120 g/eq), "jER (registered trademark)" 604 (epoxy equivalent: 120 g/eq), TG3DAS (epoxy equivalent: 136 g/eq), ELM 120 (epoxy equivalent: 118 g/eq), ELM 100 (epoxy equivalent: 118 g/eq), "jER (registered trademark)" 630 (epoxy equivalent: 98 g/eq), "ARALDITE (registered trademark)" MY 0500 (epoxy equivalent: 110 g/eq), "ARALDITE (registered trademark)" MY0510 (epoxy equivalent: 101 g/eq), "ARALDITE (registered trademark)" MY 0600 (epoxy equivalent: 106 g/eq), "ARALDITE (registered trademark)" MY 0610 (epoxy equivalent: 99 g/eq), "TEPIC (registered trademark)"-S (epoxy equivalent: 100 g/eq), "TEPIC (registered trademark)"- G (epoxy equivalent: 100 g/eq) and "TEPIC (registered trademark)"-L (epoxy equivalent: 100 g/eq).

These epoxy resins may be used singly, or a plurality of kinds thereof may be used in combination.

The component [B] is an amine curing agent. The amine curing agent has an amino group capable of reacting with an epoxy group, and reacts with an epoxy group and functions as a curing agent.

Examples of the amine curing agent include aliphatic polyamines and aromatic polyamines. Of these, an aromatic polyamine is preferably used, because of its ability to impart high mechanical properties and heat resistance to the resulting epoxy resin cured product. These amine curing agents may be used singly, or a plurality of kinds thereof may be used in combination.

Examples of the amine curing agent which is classified as the aromatic polyamine include: diethyl toluene diamines such as 2,2'-diethyldiaminodiphenylmethane, 2,4-diethyl-6-methyl-m-phenylenediamine, 4,6-diethyl-2-methyl-m-phenylenediamine and 4,6-diethyl-m-phenylenediamine; 4,4'-methylenebis(N-methylaniline), 4,4'-methylenebis(N-ethylaniline), 4,4'-methylenebis(N-sec-butylaniline), N,N'-di-sec-butyl-p-phenylenediamine, 4,4'-diaminodiphenylmethane, 3,3'-diaminodiphenyl sulfone, 4,4'-diaminodiphenyl sulfone, 3,3'- diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3'-di-t-butyl-5,5'-diisopropyl-4,4'-diaminodiphenylmethane and 3,3',5,5'-tetra-t-butyl-4,4'-diaminodiphenylmethane. Of these, 3,3'-diaminodiphenyl sulfone or 4,4'-diaminodiphenyl sulfone is preferably used, because the resulting cured product has particularly excellent mechanical properties.

Examples of commercially available products of the aromatic polyamine include: SEIKACURE S (manufactured by Wakayama Seika Kogyo Co., Ltd.); MDA-220 (manufactured by Mitsui Chemicals, Inc.); "jERcure (registered trademark)" W (manufactured by Mitsubishi Chemical Corporation); 3,3'-DAS (manufactured by Mitsui Chemicals, Inc.); and "Lonzacure (registered trademark)" M-DEA(manufactured by Lonza Inc.), "Lonzacure (registered trademark)" M-DIPA (manufactured by Lonza Inc.), "Lonzacure (registered trademark)" M-MIPA (manufactured by Lonza Inc.) and "Lonzacure (registered trademark)" DETDA 80 (manufactured by Lonza Inc.).

The amine curing agent in the present invention is preferably incorporated in such an amount that the ratio (H/E) of H to E, when the total number of moles of epoxy groups contained in the epoxy resin as the component [A] is defined as E (mol) and the total number of moles of active hydrogen contained in the amine curing agent as the component [B] is defined as H (mol), is 0.50 or more and 1.30 or less, more preferably 0.70 or more and 1.20 or less, and still more preferably 0.80 or more and 1.10 or less. When the ratio H/E is adjusted within the range described above, a cross-linked structure can be adequately formed by the reaction of the epoxy resin with the amine curing agent, and a resin cured product having an excellent strength and elongation can be obtained. In addition, when the ratio H/E is adjusted within the range of 0.50 or more and 1.30 or less, the component [C] to be described later is more likely to be retained in the cross-linked structure, and the effect of improving the elastic modulus and the strength can be obtained.

The component [C] is a phosphate ester compound having a molecular weight of 250 or less. The component [C] is present within a network (the definition of the network includes the portion between molecular chains, of molecules formed by the component [A] and the component [B]; the same shall apply hereinafter) formed by a cross-linked structure which has been formed by the reaction of the epoxy resin with the amine curing agent, without being chemically taken up into the cross-linked structure itself, and this state is maintained even after curing. This allows for increasing the elastic modulus of the resulting epoxy resin cured product. Surprisingly, this also allows for obtaining an epoxy resin cured product which not only has a high elastic modulus, but also has an excellent balance between the strength, the hot wet elastic modulus and the heat resistance after moisture absorption. The reason for this is not certain. However, the inventors consider as follows. That is, it is important that the component [C] have a molecular weight of 250 or less, and this allows the component [C] to be adequately retained within the network formed by the cross-linked structure which has been formed by the reaction of the epoxy resin with the amine curing agent, and enables to form a dense cured product without causing the formation of voids therein, resulting in an increase in the elastic modulus of the cured product. Further, when a strain is applied to the cured product, the component [C] can move freely within the cross-linked structure to alleviate the strain energy until destruction, resulting in an increase in the strength of the cured product. Still further, since the component [C] has a strongly polarized phosphoryl structure (P = O) within the molecule, an intermolecular interaction occurs, at this time, between the component [C] and a polar functional group in the cross-linked structure formed by the reaction of the epoxy resin with the amine curing agent; this is considered to make it possible to maintain a state in which the component [C] is adequately retained within the network formed by the cross-linked structure, even upon moisture absorption and in a high temperature environment, resulting in increases in the hot wet elastic modulus and the heat resistance after moisture absorption.

When the component [C] has a molecular weight of 250 or less, preferably 220 or less, more preferably 210 or less, and still more preferably 190 or less, the component [C] is adequately retained within the network formed by the cross-linked structure which has been formed by the reaction of the epoxy resin with the amine curing agent, making it possible to obtain a cured product having an excellent strength, elastic modulus and hot wet elastic modulus. Further, when the component [C] has a molecular weight of 100 or more, the component [C] is adequately retained within the network formed by the cross-linked structure which has been formed by the reaction of the epoxy resin with the amine curing agent, making it possible to obtain a cured product having an excellent strength, elastic modulus and hot wet elastic modulus; therefore, the component [C] preferably has such a molecular weight.

When the component [C] has a boiling point of 180°C or higher, more preferably 200°C or higher, and still more preferably 230°C or higher, the volatilization of the component [C] at the time of curing the epoxy resin composition can be reduced, making it possible to obtain a resin cured product or a fiber-reinforced composite material having excellent mechanical properties. In addition, the formation of voids and a decrease in the mechanical properties in the resulting fiber-reinforced composite material can be reduced. Therefore, the component [C] preferably has such a boiling point. In the present invention, the "boiling point" is the value at normal pressure (101 kPa). In cases where the boiling point at normal pressure cannot be measured, it is possible to use a converted boiling point converted to the value at 101 kPa using a boiling point conversion chart.

Examples of the component [C] as described above include trimethyl phosphate, triethyl phosphate, dimethyl phenylphosphonate, diethyl phenylphosphonate and dimethyl methylphosphonate. Of these, a phenylphosphonic acid alkyl ester compound having an aromatic ring within the molecule, such as dimethyl phenylphosphonate or diethyl phenylphosphonate is preferred, because when such a compound is incorporated, the resulting resin cured product has particularly excellent mechanical properties. Further, among the examples of the component [C] described above, the phenylphosphonic acid alkyl ester compound is also preferred from the viewpoints that the compound has a high boiling point, and that the formation of voids can be reduced in the resulting fiber-reinforced composite material. These compounds may be used singly, or a plurality of kinds thereof may be used in combination.

It is important that the epoxy resin composition according to the present invention contain the component [C] at a content of 1 part by mass or more and 15 parts by mass or less of the component [C] with respect to 100 parts by mass of the component [A]. When the incorporated amount of the component [C] is adjusted to 1 part by mass or more, more preferably 5 parts by mass or more, it is possible to obtain a cured product having an excellent strength and elastic modulus. Further, when the incorporated amount of the component [C] is adjusted to 15 parts by mass or less, more preferably 12 parts by mass or less, it is possible to obtain a cured product having an excellent hot wet elastic modulus and heat resistance after moisture absorption.

The component [D] is a thermoplastic resin. It is preferred that the epoxy resin composition according to the present invention further contain the component [D]. The incorporation of the component [D] enables to control the tackiness of the resulting prepreg and the fluidity of the matrix resin when heat curing the prepreg.

Such a thermoplastic resin is preferably a thermoplastic resin including a polyaryl ether skeleton. Examples thereof include polysulfone, polyphenylsulfone, polyethersulfone, polyetherimide, polyphenylene ether, polyether ether ketone and polyether ether sulfone. These thermoplastic resins including a polyaryl ether skeleton may be used singly, or a plurality of kinds thereof may be used in combination. In particular, polyethersulfone can be preferably used, because toughness can be imparted to the resulting fiber-reinforced composite material without causing a decrease in the heat resistance or the mechanical properties of the composite material.

Examples of commercially available products of the component [D] include SUMIKAEXCEL (registered trademark)" PES 5003P (manufactured by Sumitomo Chemical Industries, Co., Ltd.)", "SUMIKAEXCEL (registered trademark)" PES 2603P (manufactured by Sumitomo Chemical Industries, Co., Ltd.) and "Virantage (registered trademark)" VW10700RFP (manufactured by Solvay Advanced Polymers, Inc.).

It is preferred that the epoxy resin composition contain the component [D] at a content of 2 parts by mass or more with respect to 100 parts by mass of the component [A]. When the content of the component [D] is adjusted to 2 parts by mass or more, more preferably 5 parts by mass or more, tackiness can be imparted to the resulting prepreg, making it possible to obtain a prepreg having an excellent handleability. In addition, the fluidity of the resin during heat curing can be reduced, making it possible to obtain a fiber-reinforced composite material having a uniform resin content. Further, the epoxy resin composition preferably contains 20 parts by mass or less of the component [D] with respect to 100 parts by mass of the component [A]. When the content of the component [D] is adjusted to 20 parts by mass or less, more preferably 16 parts by mass or less, an excessive decrease in the fluidity of the resin during heat curing can be reduced, making it possible to obtain a fiber-reinforced composite material with less voids.

As described above, the epoxy resin composition according to the present invention preferably contains the component [A], the component [B], the component [C] and the component [D], and may be a composition composed of the component [A], the component [B], the component [C] and the component [D], as shown in Examples. The epoxy resin composition may contain an additive(s) and/or the like, as long as the effect of the invention is not affected.

In the present invention, it is important that all epoxy resins to be used as the component [A] each have an average epoxy equivalent of 160 g/eq or less. When each epoxy resin as the component [A] has an average epoxy equivalent of 160 g/eq or less, more preferably 140 g/eq or less, it is possible to obtain a cured product having an excellent strength, elastic modulus, hot wet elastic modulus and heat resistance after moisture absorption. Further, each epoxy resin as the component [A] preferably has an average epoxy equivalent of 120 g/eq or more, because the curing reaction is less likely to go out of control during the curing of the epoxy resin, making it possible to reduce a decrease in the mechanical strength of the resulting cured product.

The "average epoxy equivalent" as used herein is defined as the value obtained by the following equation:
[Math 1]

$$\text{Average epoxy equivalent (g/eq)} = \frac{\sum_{i=1}^{n} (W_i)}{\sum_{i=1}^{n} (W_i / E_i)} \quad \cdots \cdots \text{Equation (1)}$$

(In the equation (1), Wi represents the mass (g) of the i-th epoxy resin; Ei represents the epoxy equivalent (g/eq) of the i-th epoxy resin; and n is a positive integer and represents the number of the types of the epoxy resins.)

It is particularly suitable that the component [C] to be used in the present invention be incorporated in combination with the component [A] which has an average epoxy equivalent of 160 g/eq or less. When the component [A] has an average epoxy equivalent of 160 g/eq or less, a large number of epoxy groups are contained in the resin composition, and therefore, a large number of hydroxyl groups are formed by the ring-opening addition reaction of the epoxy groups and the amine curing agent. As a result, the intermolecular interaction between a hydroxyl group formed in the resulting cured product and a polar functional group contained in the phosphate ester compound as the component [C] is facilitated, allowing the resulting resin cured product to have an excellent strength, elastic modulus, hot wet elastic modulus and heat resistance after moisture absorption.

Further, when the component [A] has an average epoxy equivalent of 160 g/eq or less, the crosslinking density of the resulting epoxy resin cured product is increased, and thus the mesh size of the cross-linked epoxy resin is decreased. As a result, the component [C] is firmly retained within the network formed by the cross-linked structure, and the resulting resin cured product has an excellent strength, elastic modulus, hot wet elastic modulus and heat resistance after moisture absorption. In addition, the component [A] preferably has an average epoxy equivalent of 110 g/eq or more, because the amount of heat generated during curing, when the epoxy resin composition is cured, is reduced, making it possible to prevent the reaction from going out of control, and the resulting cured product has an excellent strength, elastic modulus, hot wet elastic modulus and heat resistance after moisture absorption.

The epoxy resin composition according to the present invention has an excellent elastic modulus, strength and elongation, and can be suitably used as a matrix resin for a fiber-reinforced composite material. That is, the fiber-reinforced composite material according to the present invention is composed of a cured product of the epoxy resin composition according to the present invention and continuous reinforcing fibers.

The fiber-reinforced composite material can be obtained, for example, by a method in which reinforcing fibers are impregnated with the resin composition in the molding process, for example, a method such as hand lay-up, RTM, filament winding or pultrusion molding, or alternatively, by a method in which a prepreg composed of reinforcing fibers which have been impregnated with the resin composition, in advance, is prepared, and the prepreg is molded by a method such as autoclave molding or press molding. In particular, it is preferred to prepare a prepreg composed of the epoxy resin composition and reinforcing fibers, in advance, because the arrangement of fibers and the proportion of the resin can be accurately controlled, and the properties of the composite material can be maximized. That is, the prepreg according to the present invention is composed of the epoxy resin composition according to the present invention and continuous reinforcing fibers. However, the incorporation of another component(s) is not excluded as long as the object of the present invention is not impaired.

Preferred examples of the continuous reinforcing fibers to be used in the prepreg according to the present invention and the fiber-reinforced composite material according to the present invention include carbon fibers, graphite fibers, aramid fiber and glass fibers. Of these, carbon fibers are particularly preferred. The form and the arrangement of the continuous reinforcing fibers are not particularly limited, as long as the fibers are continuous. For example, a fiber structure such as long fibers aligned in one direction, a single tow, a woven fabric, a knitted fabric or a braid is used. It is also possible to use, as the reinforcing fibers, a combination of two or more kinds of carbon fibers, glass fibers, aramid fibers, boron fibers, PBO fibers, high-strength polyethylene fibers, alumina fibers, silicon carbide fibers and the like.

Specific examples of the carbon fibers include acrylic carbon fibers, pitch-based carbon fibers and rayon-based carbon fibers. In particular, acrylic carbon fibers having a high tensile strength is preferably used.

The carbon fibers can be used in the form of twisted yarns, untwisted yarns, non-twisted yarns or the like. The use of twisted yarns, however, causes a decrease in the mechanical properties of the resulting carbon fiber-reinforced composite material, since the filaments constituting the carbon fibers are not oriented in parallel. Therefore, preferably used are carbon fibers in the form of untwisted yarns or non-twisted yarns, which allows the resulting carbon fiber-reinforced composite material to have a good balance between the formability and strength properties.

The carbon fibers preferably have a tensile elastic modulus of 200 GPa or more and 440 GPa or less. The tensile elastic modulus of the carbon fibers is affected by the degree of crystallization of the graphite structure of the carbon fibers, and a higher degree of crystallization results in a more improved elastic modulus. The carbon fibers preferably have a tensile elastic modulus within the range described above, because the rigidity and the strength of the resulting carbon fiber-reinforced composite material can be balanced at a high level. The carbon fibers more preferably have an elastic modulus of 230 GPa or more and 400 GPa or less, and still more preferably 260 GPa or more and 370 GPa or less. The tensile elastic modulus of the carbon fibers as used herein refers to the value measured in accordance with JIS R7608 (2008).

The prepreg according to the present invention can be produced by any of various known methods. For example, the prepreg can be produced by the hot melt method in which the viscosity of the resin composition is decreased by heating, without using an organic solvent, and then reinforcing fibers are impregnated with the resin composition.

Further, in the hot melt method, it is possible to use, for example, a method in which reinforcing fibers are directly impregnated with the resin composition whose viscosity is deceased by heating, or alternatively, a method in which the resin composition is coated on a release paper or the like, first, to prepare a release paper sheet with a resin film, and then the resin film is layered on both sides or one side of reinforcing fibers, followed by applying heat and pressure to allow the reinforcing fibers to be impregnated with the resin composition.

The content of the continuous reinforcing fibers in 100 parts by mass of the prepreg is preferably 30 parts by or more and 90 parts by mass or less. When the content of the continuous reinforcing fibers is adjusted to 30 parts by mass or more, more preferably 35 parts by mass or more, and still more preferably 65 parts by mass or more, the advantages of the fiber-reinforced composite material that it has an excellent specific strength and specific modulus, are more likely to be obtained. Further, an excessive increase in the amount of heat generated during curing can be reduced, during the molding of the fiber-reinforced composite material. When the content of the continuous reinforcing fibers is adjusted to 90 parts by mass or less, more preferably 85 parts by mass or less, on the other hand, the formation of voids in the resulting composite material due to poor resin impregnation can be reduced. Further, the tackiness of the prepreg can be maintained.

The fiber-reinforced composite material according to the present invention can be produced by a method, as one example, in which the plies of the above-described prepreg according to the present invention are laminated in a predetermined form, followed by applying heat and pressure to cure the resin. To apply heat and pressure in the above-described method, a method such as press molding, autoclave molding, bagging molding, wrapping tape method or internal pressure molding is used.

The fiber-reinforced composite material according to the present invention can be widely used in aerospace applications, general industrial applications and sports applications. More specifically, in general industrial applications, the fiber-reinforced composite material can be suitably used in structures such as automobiles, marine vessels and railroad vehicles. In sports applications, the fiber-reinforced composite material can be suitably used in applications for golf club shafts, fishing rods, tennis rackets and badminton rackets.

Examples

The present invention will now be described in further detail with reference to Examples. It is noted, however, that the scope of the present invention is in no way limited only to these Examples. In the following Examples, the unit "part(s)" used to describe the composition ratio refers to "part(s) by mass" unless otherwise specified. Further, the measurements of various properties (including but not limited to physical properties) were carried out in an environment of a temperature of 23°C and a relative humidity of 50%, unless otherwise specified.

< Materials Used in Examples and Comparative Examples >

(1) Component [A]: Epoxy Resins

· "SUMI-EPOXY (registered trademark)" ELM 434 (diaminodiphenylmethane type epoxy resin, glycidyl amine type epoxy resin, epoxy equivalent: 119 g/eq, manufactured by Sumitomo Chemical Co., Ltd.)
. "EPICLON (registered trademark)" 830 (bisphenol F type epoxy resin, glycidyl ether type epoxy resin, epoxy equivalent: 172 g/eq, manufactured by DIC Corporation).

(2) Component [B]: Amine Curing Agent

· SEIKACURE S (4,4'-diaminodiphenyl sulfone, active hydrogen equivalent: 62 g/eq, manufactured by Wakayama Seika Kogyo Co., Ltd.).

(3) Component [C]: Phosphate Ester Compounds Having Molecular Weight of 250 or less

· Trimethyl phosphate (molecular weight: 140, boiling point: 197°C, manufactured by Tokyo Chemical Industry Co., Ltd.)
· Dimethyl phenylphosphonate (molecular weight: 186, boiling point: 247°C, manufactured by Tokyo Chemical Industry Co., Ltd.)
· Diethyl phenylphosphonate (molecular weight: 214, boiling point: 267°C, manufactured by Tokyo Chemical Industry Co., Ltd.).

(4) Component [D]: Thermoplastic Resin

. "SUMIKAEXCEL (registered trademark)" PES 5003P (polyethersulfone), manufactured by Sumitomo Chemical Co., Ltd.).

(5) Other Components

- PX-200 (aromatic condensed phosphate ester, molecular weight: 687, manufactured by Daihachi Chemical Industry Co., Ltd.)
- 1,2-Hexandiol (molecular weight: 118, manufactured by Tokyo Chemical Industry Co., Ltd.).

< Various Evaluation Methods >

The properties of the epoxy resin composition of each of Examples and Comparative Examples were measured using the following measurement methods, and evaluated.

(1) Three-point Bending Measurement of Resin Cured Product

After defoaming the uncured resin composition in vacuum, the resin composition was placed in a mold which had been set to a thickness of 2 mm with a 2 mm-thick spacer made of "TEFLON (registered trademark)". The resin composition was heated from 30°C at a rate of 1.5°C/min, and maintained at a temperature of 180°C for 2 hours to cure the resin, to obtain a resin cured product in the form of a plate having a thickness of 2 mm. Test pieces each having a width of 10 mm and a length of 60 mm were cut out from the thus obtained resin cured product. Using an Instron universal tester (manufactured by Instron Corporation), three-point bending measurements were carried out in accordance with JIS K7171 (1994), at a span of 32 mm and a cross-head speed of 2.5 mm/min, with the number of samples of n = 6. The mean value of the measured values of the elastic modulus and the mean value of the measured values of the strength were defined as the elastic modulus and the strength of the resin cured product, respectively. Further, test pieces each having a width of 10 mm and a length of 60 mm were cut out from the resin cured product, and immersed in boiling water at 1 atm for 20 hours to absorb moisture. Thereafter, using the Instron universal tester (manufactured by Instron Corporation) under the conditions where the temperature of the test pieces was adjusted to 82°C using the thermostatic chamber, three-point bending measurements were carried out in accordance with JIS K7171 (1994) under the same conditions as described above, at a span of 32 mm. The mean value of the measured values of the elastic modulus was defined as the hot wet elastic modulus.

(2) Measurement of Glass Transition Temperature (Tg) of Resin Cured Product

After defoaming the uncured resin composition in vacuum, the resin composition was placed in a mold which had been set to a thickness of 2 mm with a 2 mm-thick spacer made of "TEFLON (registered trademark)". The resin composition was heated from 30°C at a rate of 1.5°C/min, and maintained at a temperature of 180°C for 2 hours to cure the resin, to obtain a resin cured product in the form of a plate having a thickness of 2 mm. A test piece having a width of 12.7 mm and a length of 55 mm was cut out from the thus prepared resin cured plate, and immersed in boiling water at 1 atm for 48 hours. Thereafter, the glass transition temperature (Tg after moisture absorption) was determined by the DMA method in accordance with SACMA SRM18R-94. In the resulting storage modulus G' curve, the temperature value at the intersection of the tangent line in the glassy state and the tangent line in the transition state was defined as the glass transition temperature. The measurement was carried out at a temperature rise rate of 5°C/min and a frequency of 1 Hz.

< Example 1 >

(Preparation of Resin Composition)

A resin composition was prepared by the following procedure.
Into a kneading apparatus, 60 parts of "SUMI-EPOXY (registered trademark)" ELM 434 and 40 parts of "EPICLON (registered trademark)" 830 as the component [A] shown in Table 1 were introduced, and 15 parts of "SUMIKAEXCEL (registered trademark)" PES 5003P as the component [D] was further added, and the mixture was heated to a target temperature of 150°C while kneading. After kneading the mixture at 150°C for one hour to dissolve the component [D], the mixture was cooled to 70°C while kneading, and 45 parts of SEIKACURE S as the component [B] was added thereto, followed by stirring for 30 minutes. Thereafter, 5 parts of trimethyl phosphate as the component [C] was added, and the resulting mixture was stirred for another 10 minutes, to obtain a resin composition.
At this time, the average epoxy equivalent of the epoxy groups in the component [A] was 137 g/eq.
Three-point bending measurements were carried out for the resin cured product of the thus obtained resin composition, and as a result, the resin cured product had a strength of 185 MPa, an elastic modulus of 3.7 GPa, a hot wet elastic modulus of 2.6 GPa and a Tg after moisture absorption of 167°C. As compared with the results of Comparative Example 1 (in which the component [C] was not incorporated) to be described later, an excellent strength, elastic modulus and hot wet elastic modulus were obtained, without compromising the Tg after moisture absorption.

< Examples 2 to 5 >

In each of the Examples, the component [A], the component [B], the component [C] and the component [D] were incorporated in the same manner as in Example 1 described above, in accordance with the composition ratio shown in Table 1, to obtain a resin composition.

The measured results of various properties in the Examples are as shown in Table 1. A resin cured product having an excellent balance between the strength, the elastic modulus, the hot wet elastic modulus and the Tg after moisture absorption was obtained in each Example, even in cases where the composition of the resin composition was varied as in Examples 2 to 5.

< Examples 6 to 9 >

In each of the Examples, the component [A], the component [B], the component [C] and the component [D] were incorporated in the same manner as in Example 1 described above, in accordance with the composition ratio shown in Table 1, to obtain a resin composition. The measured results of various properties in the Examples are as shown in Table 1. A resin cured product having an excellent balance between the strength, the elastic modulus, the hot wet elastic modulus and the Tg after moisture absorption was obtained in each Example, even in cases where the composition ratio of the glycidyl amine type epoxy resin and the glycidyl ether type epoxy resin, as the component [A], was varied as in Examples 6 to 9.

< Example 10 >

The component [A], the component [B], the component [C] and the component [D] were incorporated in the same manner as in Example 1 described above, in accordance with the composition ratio shown in Table 1, to obtain a resin composition. The measured results of various properties in Example 10 are as shown in Table 1. While the resulting cured product had a somewhat lower strength and fracture strain under hot wet conditions compared with the cases in which the component [D] was incorporated, a resin cured product having a sufficiently excellent properties was obtained.

< Comparative Examples 1 to 5 >

In each of the Comparative Examples, the component [A], the component [B] and the component [D] (as well as the component [C] or a substitute thereof) were incorporated in the same manner as in Example 1 described above, in accordance with the composition ratio shown in Table 1, to obtain a resin composition.

In Comparative Example 1, a component corresponding to the component [C] was not incorporated. The comparison of the measured results in Comparative Example 1 with those in Example 1 reveals that the incorporation of the component [C] leads to improvements in the strength, the elastic modulus and the hot wet elastic modulus of the resulting resin cured product, without compromising the Tg after moisture absorption thereof.

In Comparative Example 2, PX-200 was incorporated instead of the component [C]. PX-200 does not satisfy the requirement that the component [C] has a molecular weight of 250 or less. The comparison of the measured results in Comparative Example 2 with those in Example 1 reveals that, when the component [C] has a molecular weight of 250 or less, the resulting resin cured product has an excellent strength, elastic modulus, hot wet elastic modulus and Tg after moisture absorption.

In Comparative Example 3, 1,2-hexandiol was incorporated instead of the component [C]. The comparison of the measured results in Comparative Example 3 with those in Example 1 reveals that the incorporation of a phosphate ester compound which is the component [C] allows the resulting cured product to have an excellent hot wet elastic modulus and Tg after moisture absorption.

In Comparative Example 4, 18 parts by mass of dimethyl phenylphosphonate was incorporated as the component [C]. Comparative Example 4 does not satisfy the requirement that the epoxy resin composition contains 1 part by mass or more and 15 parts by mass or less of the component [C] with respect to 100 parts by mass of the component [A]. The comparison of the measured results in Comparative Example 4 with those in Example 4 reveals that, when the epoxy resin composition contains 1 part by mass or more and 15 parts by mass or less of the component [C] with respect to 100 parts by mass of the component [A], the resulting resin cured product has an excellent Tg after moisture absorption.

In Comparative Example 5, the component [A] has an average epoxy equivalent of 172 g/eq, and the requirement that the component [A] has an average epoxy equivalent of 160 g/eq is not satisfied. The comparison of the measured results in Comparative Example 5 in which 5 parts of dimethyl phenylphosphonate was incorporated, with those in Example 3 reveals that, when the requirement that the component [A] has an average epoxy equivalent of 160 g/eq or less is satisfied, the resulting resin cured product has an excellent strength, elastic modulus, hot wet elastic modulus and Tg after moisture absorption.

[Table 1]

| | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 |
|---|---|---|---|---|---|---|---|---|---|---|---|---|---|---|---|---|
| Component [A] | "SUMI-EPOXY (registered trademark)" ELM-434 | 60 | 60 | 60 | 60 | 60 | 100 | 80 | 40 | 20 | 60 | 60 | 60 | 60 | 60 | - |
| | "EPICLON (registered trademark)" 830 | 40 | 40 | 40 | 40 | 40 | - | 20 | 60 | 80 | 40 | 40 | 40 | 40 | 40 | 100 |
| Component [B] | SEIKACURE S | 45 | 45 | 45 | 45 | 45 | 52 | 49 | 42 | 39 | 45 | 45 | 45 | 45 | 45 | 35 |
| Component [C] | Trimethyl phosphate | 5 | - | - | - | - | - | - | - | - | - | - | - | - | - | - |
| | Dimethyl phenylphosphonate | - | 3 | 5 | 12 | - | 5 | 5 | 5 | 5 | 5 | - | - | - | 18 | 5 |
| | Diethyl phenylphosphonate | - | - | - | - | 5 | - | - | - | - | - | - | - | - | - | - |
| Thermoplastic resin | "SUMIKAEXCEL (registered trademark)" 5003P | 15 | 15 | 15 | 15 | 15 | 15 | 15 | 15 | 15 | - | 15 | 15 | 15 | 15 | 15 |
| Other components | PX-200 | - | - | - | - | - | - | - | - | - | - | - | 5 | - | - | - |
| | 1,2-Hexandiol | - | - | - | - | - | - | - | - | - | - | - | - | 5 | - | - |
| Average epoxy equivalent (g/eq) | | 137 | 137 | 137 | 137 | 137 | 120 | 128 | 147 | 158 | 137 | 137 | 137 | 137 | 137 | 172 |
| Molecular weight of phosphate ester compound | | 140 | 186 | 186 | 186 | 214 | 186 | 186 | 186 | 186 | 186 | - | 687 | - | - | 186 |
| Properties of cured product | Strength of cured product (MPa) | 185 | 179 | 185 | 198 | 181 | 186 | 186 | 179 | 175 | 173 | 168 | 176 | 188 | 181 | 169 |
| | Elastic modulus of cured product (GPa) | 3.7 | 3.7 | 3.8 | 3.9 | 3.7 | 3.8 | 3.8 | 3.7 | 3.7 | 3.9 | 3.5 | 3.5 | 3.8 | 3.8 | 3.6 |

(continued)

| | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 |
|---|---|---|---|---|---|---|---|---|---|---|---|---|---|---|---|
| Elastic modulus under hot wet conditions of cured product (GPa) | 2.6 | 2.6 | 2.6 | 2.7 | 2.6 | 2.6 | 2.6 | 2.6 | 2.5 | 2.6 | 2.4 | 2.4 | 2.3 | 2.5 | 2.4 |
| Fracture strain under hot wet conditions of cured product (%) | > 13 | > 13 | > 13 | > 13 | > 13 | 7 | > 13 | > 13 | > 13 | 9 | > 13 | > 13 | > 13 | > 13 | > 13 |
| Tg of cured product after moisture absorption (°C) | 167 | 165 | 167 | 164 | 165 | 199 | 182 | 157 | 142 | 165 | 164 | 151 | 128 | 125 | 121 |

**Claims**

1. An epoxy resin composition comprising the following components [A], [B] and [C]:

   [A]: an epoxy resin,
   [B]: an amine curing agent, and
   [C]: a phosphate ester compound having a molecular weight of 250 or less;

   wherein said epoxy resin composition satisfies the following requirements (1) and (2):

   (1): said epoxy resin composition comprises 1 part by mass or more and 15 parts by mass or less of said component [C] with respect to 100 parts by mass of said component [A]; and
   (2): said component [A] has an average epoxy equivalent of 160 g/eq or less.

2. The epoxy resin composition of claim 1, wherein said epoxy resin composition comprises 40% by mass or more of an epoxy resin having an epoxy equivalent of 130 g/eq or less in 100% by mass of said component [A].

3. The epoxy resin composition of claim 1 or 2, wherein said epoxy resin composition comprises from 20 to 80% by mass of a glycidyl ether type epoxy resin in 100% by mass of said component [A].

4. The epoxy resin composition of any one of claims 1 to 3, wherein said epoxy resin composition comprises diaminodiphenyl sulfone as said component [B].

5. The epoxy resin composition of any one of claims 1 to 4, further comprising the following component [D]:
   [D]: a thermoplastic resin.

6. The epoxy resin composition of any one of claims 1 to 5, wherein said epoxy resin composition comprises a phenylphosphonic acid alkyl ester as said component [C].

7. A prepreg composed of said epoxy resin composition of any one of claims 1 to 6, and continuous reinforcing fibers.

8. A fiber-reinforced composite material composed of a cured product of said epoxy resin composition of any one of claims 1 to 6, and continuous reinforcing fibers.

## INTERNATIONAL SEARCH REPORT

| International application No. |
| --- |
| **PCT/JP2022/004172** |

| A. | CLASSIFICATION OF SUBJECT MATTER |
| --- | --- |

*C08G 59/20*(2006.01)i; *C08G 59/50*(2006.01)i; *C08K 5/521*(2006.01)i; *C08L 63/00*(2006.01)i; *C08J 5/24*(2006.01)i
FI:  C08G59/20; C08G59/50; C08L63/00 C; C08K5/521; C08J5/24 CFC

According to International Patent Classification (IPC) or to both national classification and IPC

| B. | FIELDS SEARCHED |
| --- | --- |

Minimum documentation searched (classification system followed by classification symbols)

C08G59/20; C08G59/50; C08K5/521; C08L63/00; C08J5/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | HERGENROTHER, Paul, et al. Flame retardant aircraft epoxy resins containing phosphorus. Polymer. 2005. vol. 46, Issue 14, pp 5012-5024, DOI:10.1016/j.polymer. 25 April 2005 1. Introduction, 3.3., Scheme 2., Compounds 4, 3.3.2., Table 2., Formulation F9 | 1-8 |
| A | WO 02/50153 A1 (MITSUBISHI RAYON CO., LTD.) 27 June 2002 (2002-06-27) | 1-8 |
| A | CN 111826105 A (BEIJING KMT TECH CO LTD) 27 October 2020 (2020-10-27) | 1-8 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 April 2022** | **19 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/004172**

| Patent document cited in search report | | | Publication date (day/month/year) | Patent family member(s) | | | Publication date (day/month/year) |
|---|---|---|---|---|---|---|---|
| WO | 02/50153 | A1 | 27 June 2002 | US | 2004/0034127 | A1 | |
| | | | | EP | 1359174 | A1 | |
| CN | 111826105 | A | 27 October 2020 | (Family: none) | | | |

Form PCT/ISA/210 (patent family annex) (January 2015)

**REFERENCES CITED IN THE DESCRIPTION**

**Patent documents cited in the description**

• JP 2019199552 A